# EUROPEAN PATENT SPECIFICATION

(11) **EP 2 499 459 B1**
(45) Date of publication and mention of the grant of the patent: **26.12.2018**
(21) Application number: 09752353.4
(22) Date of filing: 12.11.2009
(51) Int. Cl.: G01C 21/26

(54) **NAVIGATION SYSTEM WITH LIVE SPEED WARNING FOR MERGING TRAFFIC FLOW**
NAVIGATIONSSYSTEM MIT LIVE-GESCHWINDIGKEITSWARNUNG FÜR DIE ZUSAMMENFÜHRUNG VON VERKEHRSFLÜSSEN
SYSTÈME DE NAVIGATION AVEC ALERTE DE VITESSE EN DIRECT POUR UN COURANT DE CIRCULATION CONVERGENT

(43) Date of publication of application: 19.09.2012
(73) Proprietor: TomTom Belgium N.V., 9050 Gent (BE)
(72) Inventor: T'SIOBBEL, Stephen, B-9820 Merelbeke (BE); BASTIAENSEN, Edwin, B-1060 Brussels (BE)
(74) Representative: Siem, Max Yoe Shé
(86) International application number: PCT/EP2009/065033
(87) International publication number: WO 2011/066850

(56) References cited:
- WO-A1-2004/111574
- US-A- 5 761 630
- US-A1- 2007 032 943
- US-A1- 2007 067 100

## Description

### BACKGROUND OF THE INVENTION

### Field of the Invention

The present invention relates to a navigation system, and more particularly to a method and system for taking into account the speed of a vehicle traveling along a road segment and providing an acoustic, haptic, visual or other warning or recommendation to the vehicle driver when nearing a merging region with another road segment.

### Related Art

In the current field of Personal Navigation Systems (PNAV) like dedicated handheld navigation systems, Personal Digital Assistants (PDAs), and mobile telephones provided with a navigation module, as well as in the in-car navigation market, end-user needs are already commonly addressed by applications. Vendors differentiate by adding additional functions and features to navigation (and ADAS systems). Examples include speed camera information, traffic information etc. as well as, Junction Views. Junction Views are a feature of some navigation systems that improve guidance and user understanding of crossings, bifurcations or junctions. Such additional features of navigation systems may assist the user in taking the correct decisions when traveling from a starting location to a destination. One approach is to display a junction of, for instance, a highway on the display screen of the navigation system in the car together with all lanes and signposts as are present in reality. Superimposed on or in addition to such a real or animated view are one or more arrows indicating the route to be followed by the driver to his destination and as calculated by the navigation system, or perhaps the route which is likely to be followed by the driver in case the routing function in the navigation system is not (yet) active. Reference is, e.g., made to EP-A-1,681,537 and EP-A-1,681,538.

However in real life situations, the driver has to frequently navigate complex freeway mergers where the driver has to determine a safe merging speed during a very quick comparison between traffic flow conditions as observed through the windows and windscreen. The time necessary for this comparison may be too long possibly resulting in too low attention of the driver for the real life environment which may be dangerous. Also, obstructions such as vegetation or construction equipment can obscure a complete view of the merging traffic conditions, not to mention environmental effects such as adverse weather and poor lighting conditions.

In urban areas, there are frequently many highway entries, lane merging situations and exits. Sometimes, the junction between two road segments is very short, and can unexpectedly lead to severe braking or the need for acceleration to allow the safest possible merge with the adjoining traffic flow. Particular areas of concern, e.g., where two road segments merge into one, will include gas stations on the motorway, parking and rest areas on the motorway, highway entry following a junction, junctions with merging lanes, sudden lane ends as when a motorway reduces from 4 to 3 lanes, temporary construction works, highway mergers, and the like. Merging with another traffic flow can be a very stressful driving maneuver if the driver does not know the particular section.

Document US 2007/0067100 A1 discloses a merge support system that advises the driver of a subject vehicle on a recommended merge speed, based on the speed of an approaching vehicle in the merging lane of an expressway as determined by a roadside camera.

There is therefore a need for a navigation system and method that is capable of providing a driver with a merging speed behavior recommendation, allowing the driver to focus on safely merging with another traffic flow at the safest possible speed or acceleration. Furthermore, in condition of moderate and heavy traffic flow, there is a need to assist drivers to leave a safe gap or inter-vehicle distance for vehicles merging into the main lane even if the driver cannot clearly see the merging traffic flow or the end of the merging region. In addition, vehicles can be reminded to create more space in merging lanes by changing lane to the adjacent lane, where vehicle are not merging.

### SUMMARY OF THE INVENTION

This invention relates to a navigation system of the type to be carried in a vehicle for providing its driver with navigation information. The navigation system comprises a processor, a device operatively connected to the processor for producing audible, visual and/or haptic information, and a determination device operatively connected to the processor for determining a speed and position of the navigation system relative to a road network comprising at least two road segments that merge at a common junction or merger point. A computer program is executed by the processor. The computer program comprises instructions and data in order to allow the processor to communicate the average speed of surrounding vehicular traffic proximate the junction by audible, visual or haptic means.

According to another aspect of this invention, a method provides a vehicular driver with navigation information pertaining to merging traffic conditions. The method comprises the steps of: providing a road network having first and second road segments that merge at a downstream merger point, transporting a navigation system in a vehicle traveling the first road segment, determining a position and speed of the vehicle relative to the road network, and when approaching the junction, communicating the average speed of traffic on the second road segment, or to give more general indications such as by visual or haptic means. In the most general sense, the first road segment can be a main road and the second road segment a merging lane, or vise-versa, or both the first and second road segments can be main roads.

The invention provides beforehand information about average speed of merging traffic. In advanced implementations of the invention, traffic density information can also be provided to assist a driver on a main road to leave a safe gap for vehicles merging into their lane even if the driver cannot clearly see the merging traffic flow or the end of the merging region. A still further embodiment of this invention provides an early warning for the end of lane (e.g. when there is no shoulder lane available, leading to the situation that the merging vehicle may need to stop at the end of the lane. This information, communicated well in advance, will help the driver to make more adequate merging behavior decisions. In another embodiment, the driver is invited to move to another lane, to make space for merging situations ahead.

Using the system and method of this invention, a driver is forewarned of merging traffic speed conditions. Thus, where two road segments merge into one, such as at highway on-ramps, off-ramps, lane reductions, motorway mergers and the like, a driver is notified of traffic speed on the other road segment upstream of the merger point, thereby reducing the need for severe braking or acceleration when mixing with the traffic flow at the point of merger. Merging with another traffic flow is made less stressful, particularly in roadway sections which may be unfamiliar to the driver or at times when visibility is impaired.

The invention covers the lane merging assistance/warning for a variety of situations, including vehicles coming from the merging lane (i.e., providing guidance to accelerate/decelerate to a merging speed ahead; warning for the end of the lane including a potential warning to stop as the end of the lane is reached; as well as lane merging assistance/warning for vehicles on the main road, indicating the merging traffic and asking to adjust speed, keep distance (leave a gap to allow the vehicles to merge and change lane prior to arriving at the merge area allowing other vehicles in the merging area to more efficiently merge. The invention is applicable to any roadway type, including but not limited to motorways and secondary roads (70 and 80 km per hour roads).

### BRIEF DESCRIPTION OF THE DRAWINGS

These and other features and advantages of the present invention will become more readily appreciated when considered in connection with the following detailed description and appended drawings, wherein:
Figure 1 is a highly simplified view of a motor vehicle poised on a roadway network and including a navigation system according to the subject invention;
Figure 2 is a schematic view of the microprocessor portion of the navigation system together with other peripheral components and a communication network interface;
Figure 3 is an enlarged, exemplary view of a compact, portable navigation system according to the subject invention including an enlarged frontal display screen for presenting map data information to a vehicle driver;
Figure 4 is a simplified, bird's eye view of a portion of a road network having first and second road segments which merge with one another over a merger region and showing vehicular traffic moving along each of the first and second road segments;
Figure 5 is a bird's eye view as in Figure 4 but depicting one vehicle on the first road segment having a navigation system according to the subject invention;
Figure 6 is a bird's eye view as in Figure 5 showing the vehicle fitted with the subject navigation system within the merger region of the first and second road segments;
Figure 7 is a view as in Figure 6 showing the vehicle fitted with the subject navigation system nearing the end of the merger region;
Figure 8 is a bird's eye view of a portion of an altogether different road network wherein two substantially similar, multi-lane road segments merge together with vehicular traffic traveling along each road segment and vehicles fitted with the subject navigation system traveling, respectively, the first and second road segments upstream of the merger region;
Figure 9 is a flow diagram describing the main steps of the subject invention;
Figure 10 is an illustration for informing a driver on a merging lane the need for accelerating to a safe speed to merge with traffic on the main road; and
Figure 11 is an illustration for visualizing to a driver on a main road the need for a creating a safe distance to allow for merging traffic.

### DETAILED DESCRIPTION OF THE PREFERRED EMBODIMENT

The present invention is applicable in all kinds of navigation systems; including but not limited to handheld devices, PDAs, and mobile telephones with navigation software and in-car navigation systems built in a vehicle. The invention can be implemented in any type of standard navigation system available on the market. In order to better understand the present invention, below, the application in one possible in-car navigation system will be further explained in detail. However, this does not exclude any other type of implementation, for instance, a handheld device.

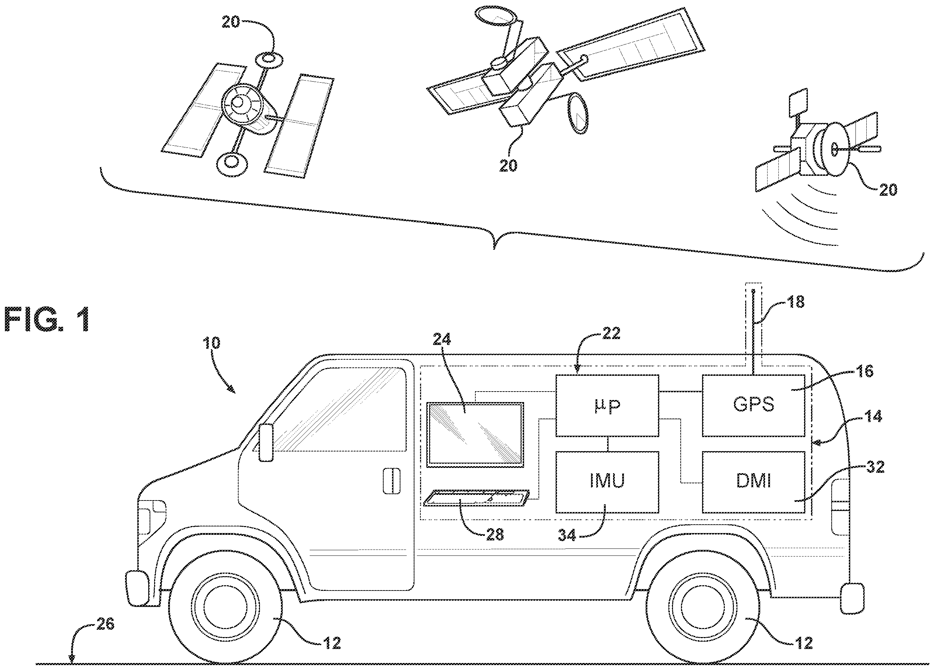

Figure 1 shows a vehicle provided with a navigation system. The vehicle 10 has several wheels 12. Moreover, the vehicle 10 is provided with a navigation system, generally indicated at 14. As shown in figure 1, the navigation system 14 may comprise a determination device which may include a GPS (global positioning system) 16 or other GNSS (Global Navigation Satellite System) unit connected to an antenna 18 and arranged to communicate with a plurality of satellites 20 and to calculate a position signal from signals received from the satellites 20. The GPS system 16 may also deliver heading data (i.e., direction of travel) and speed of the vehicle 10. The GPS system 16 may be a DGPS system (differential GPS) or one augmented by WASS (Wide Area Augmentation System) providing an accuracy of, for example, 1 sigma / 1 meter (apart from possible white noise). The GPS system 16 is connected to a microprocessor 22 that is arranged to process the GPS output signals.

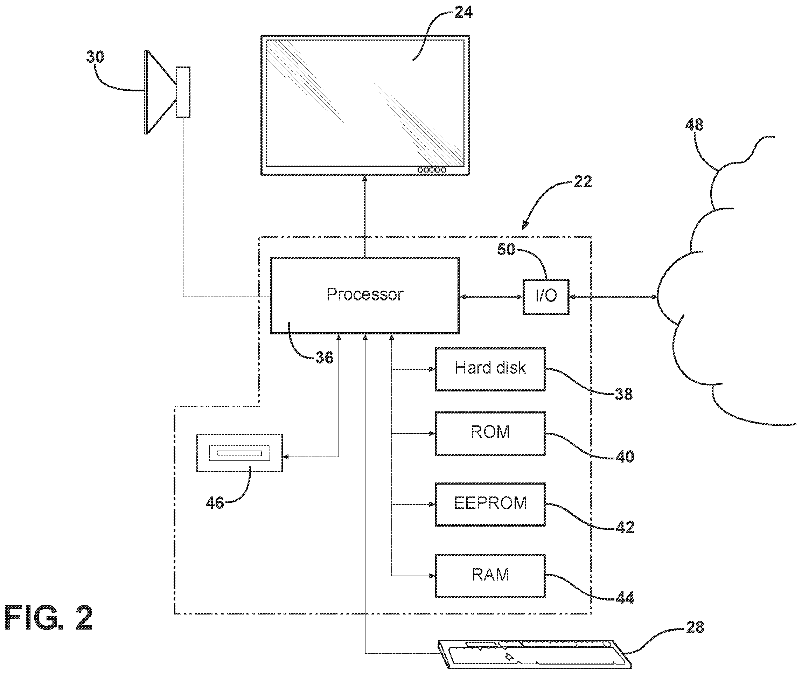

Based on the signals received from the GPS system 16, the microprocessor 22 determines suitable display signals to be displayed on a display 24 in the vehicle 10, informing the driver where the vehicle 10 is located relative to a road network, generally indicated at 26, and possibly in what direction it is traveling. Moreover, in the context of the present invention, the microprocessor 22 is programmed with route planning software to calculate a route for the driver of the vehicle 10 from a starting location to a desired destination. Such a desired destination is, for instance, input by a driver via a keyboard 28, touch screen, or other interface which is connected to the microprocessor 22. The keyboard 28 can also be used by the driver to ask the microprocessor 22 to show other information as is known to persons skilled in the art. Instead of a keyboard 28, any alternative device used by the driver to communicate with the microprocessor 22 can be used, like a touch screen or a voice convertor. The microprocessor 22 generates suitable routing instructions for the driver that include both visual data shown on the display 24 and audible data via a speaker 30 (Figure 2). Such route planning software is known from the prior art and does not need further clarification here. Below, only the features of such software necessary for the invention are clarified in detail.

As shown, in order to enhance the precision of the position determination, the determination system may also include a DMI (Distance Measurement Instrument) 32. This instrument is an odometer that measures a distance traveled by the vehicle 10 by sensing the number of rotations of one or more of the wheels 12. The DMI 32 may operate with a sampling frequency of 10 or more Hz. The DMI 32 is also connected to the microprocessor 22 to allow the microprocessor 22 to take the distance as measured by the DMI 32 into account while processing the output signals from the GPS unit 16. DMIs are not widely applied in in-car navigation systems. And of course embedded navi systems can receive odometer input via the vehicle bus.

In a further embodiment, and to further enhance the precision of the position determination, the position determination system may include an IMU (Inertial Measurement Unit) 34. Such an IMU 34 can, for example, be implemented as three gyro units arranged to measure rotational accelerations and three accelerometers arranged to measure translational accelerations along three orthogonal directions. The IMU 34 / gyros and accelerometers may, for example, operate with a sampling frequency of 200 Hz. The IMU 34 is also connected to the microprocessor 22 to allow the microprocessor 22 to take the measurements by the IMU 34 into account while processing the output signals from the GPS unit 16. Like DMIs, IMUs are not widely applied in in-car navigation systems. Presently, more and more IMUs are being installed to cope with GPS outages due to urban canyons, etc. In the future, navigation devices will be expected to allow lane level positioning. For these futuristic applications to be of full potential, it is important to know in which lane the vehicle is driving. Thus, methods will be sought by which the lateral position of a vehicle on the road can be assessed to identify the appropriate lane in which is it or should be traveling. The processor 36 may also be connected to a receiver of broadcasted information or digital communication network (e.g. radio RDS, DAB) or cellular GPRS/EDGE/UMTS network

It will be understood by one skilled in the art that there are other navigational sensors that may be added or substituted to the suite described above to provide a position and heading determination at the performance/cost point desired.

The display 24 may be a so-called head-up display HUD. Examples of HUDs are: fixed HUDs and helmet mounted HUDs. Fixed HUDs may be used in vehicles and require the driver to look through a display element attached to the vehicle chassis. The navigation system 14 determines the image to be presented depending solely on the orientation of the vehicle 10. Helmet mounted displays (HMD) are technically a form of HUD, the distinction being that they feature a display element that moves with the orientation of the user's head.

In Figure 2, an overview is given of microprocessor 22 that can be used in accordance with the invention. The microprocessor 22 comprises a processor 36 for carrying out arithmetic operations. The processor 36 is connected to a plurality of memory components, including a hard disk 38, Read Only Memory (ROM) 40, Electrically Erasable Programmable Read Only Memory (EEPROM) 42, and Random Access Memory (RAM) 44. Not all of these memory types need necessarily be provided. The processor 36 is also connected to means for inputting instructions, data etc. by a user, like the keyboard 28, a touch screen and/or a voice converter. A reading unit 46 connected to the processor 36 is provided. The reading unit 46 is arranged to read data from and possibly write data on a physical data carrier like a floppy disk or a CDROM. Other data carriers may be tapes, DVD, CD-R. DVD-R, memory sticks etc. as is known to persons skilled in the art. The processor 36 is connected to the display 24, for instance, a monitor or LCD (Liquid Crystal Display) screen, HVD, or any other type of display known to persons skilled in the art. The processor 36 is also connected to the speaker 30.

The processor 36 may be connected to a communication network 48 via a wireless connection, for instance, the Public Switched Telephone Network (PSTN), a Local Area Network (LAN), a Wide Area Network (WAN), the Internet etc. by means of I/O means 50. The processor 36 may be arranged to communicate with other communication arrangements through the network 48. The physical data carrier received in the reading unit 46 may comprise a computer program product in the form of data and instructions arranged to provide the processor 36 with the capacity to perform a method in accordance with the invention. However, such computer program product may, alternatively, be downloaded via the telecommunication network 48. The processor 36 may be implemented as a stand alone system, or as a plurality of parallel operating processors each arranged to carry out subtasks of a larger computer program, or as one or more main processors with several sub-processors.

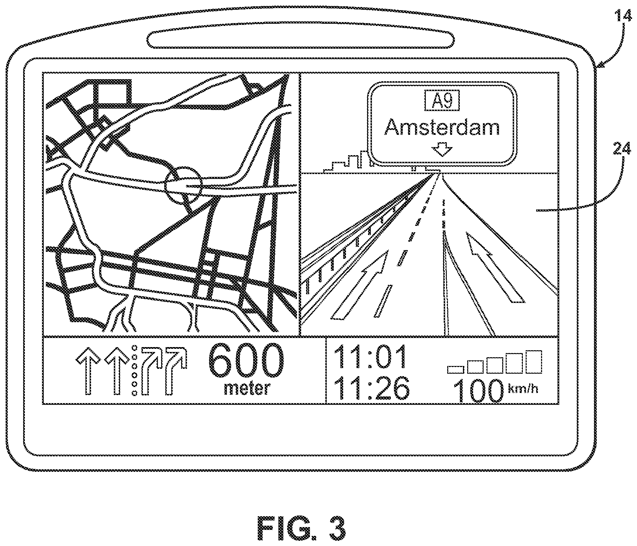

Referring to Figures 3-9, wherein like numerals indicate like or corresponding parts throughout the several views, the navigation system 14 according to this invention is shown in one exemplary embodiment wherein the display screen 24 visually presents position data information in various formats, together with ancillary information such as time to destination, current speed, upcoming turn and interchange data and the like.

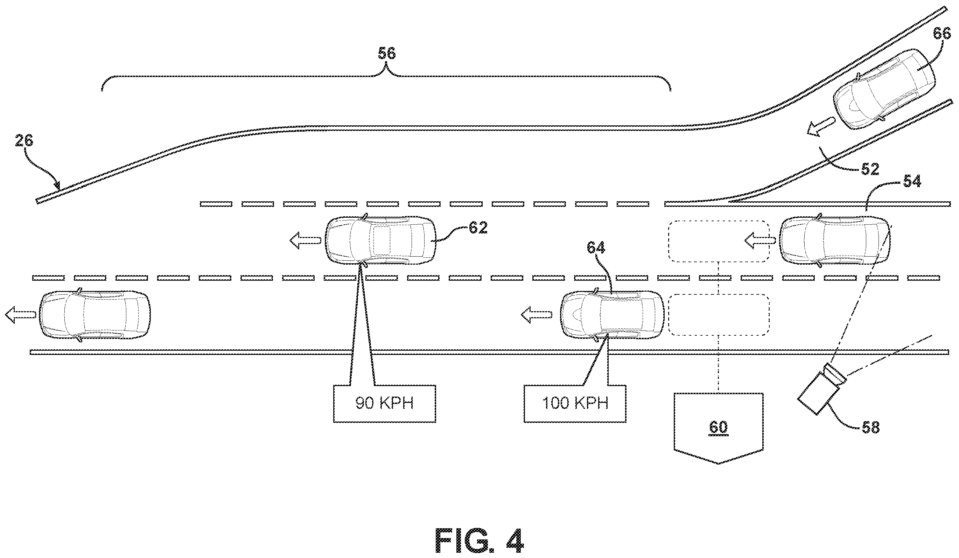

Figure 4 is a fragmentary view of a road network 26 including a first road segment 52 and a second road segment 54 which merge over a downstream merger point or junction 56. The downstream junction 56, in these examples, comprises an on-ramp region wherein traffic on a first road segment 52 is required to accelerate so as to blend in a safe and fluidic manner with traffic flowing on the second road segment 54, which is depicted as a two-lane motorway. Under these conditions, traffic flowing on the second road segment 54 will tend to flow at a generally constant average speed, whereas traffic along the first road segment 52 is required to accelerate to match that of traffic flowing on the second road segment 54. It is also possible to establish average speed estimates in some settings by considering lane speeds in association with vehicle classes or the like which may vary from one lane to the next in 10 km increments, for example. 91-100 km/h, 101-110 km/h, etc. Further still, the real or approximated speed of traffic in the merger region 56 can be categorized in ranges of, for example. 91-100 km/h, 101-110 km/h, etc. In these situations, information about the speed of traffic in the merger region 56 can be presented in categories or ranges.

Various methods can be employed to deduce the average speed of traffic flowing on the second road segment 54. This may include the use of speed cameras 58, induction loops 60, probe data, or by other techniques and devices. Probe data will typically comprise the real time transmission of position and/or speed data from navigation systems residing in vehicles traveling along the second road segment 54. Speed data can also be collected with telephone probe information, as is used for HDTraffic. However, according to the invention, the average speed of traffic travelling the second road segment 54 is calculated based on historical speed data. This information can be averaged for specific time in a day, day in a week, season, considering holiday periods, etc, to achieve good estimates for the real time of driving (known from the GPS clock or any other clock in the navigation device). Therefore, it is possible to use map data in which time dependent speed profile information has been collected and provided. For example, it has been determined that at 8 AM on Monday the average on that merging section is 25 km/h, and on Tuesday at 22 h. it is 110 km/h, etc.

In the example shown in Figure 4, two vehicles are traveling along the second road segment 54 fitted with navigation systems capable of delivering probe data which may be acquired by the communication network 48 in the known manner. As shown, one vehicle 62 on the second road segment 54 is traveling at 90 km/h and a second vehicle 64 transmits probe data indicating that it is traveling at an average of 100 km/h. Thus, if vehicles 62, 64 provided the only information as to the average speed of traffic flowing on the second road segment 54, an average speed of 95 km/h could be calculated. Or in the case of average speed estimates based on historical data, as according to the invention, extrapolated information averaged for specific time in a day, day in a week, season, etc. is used.

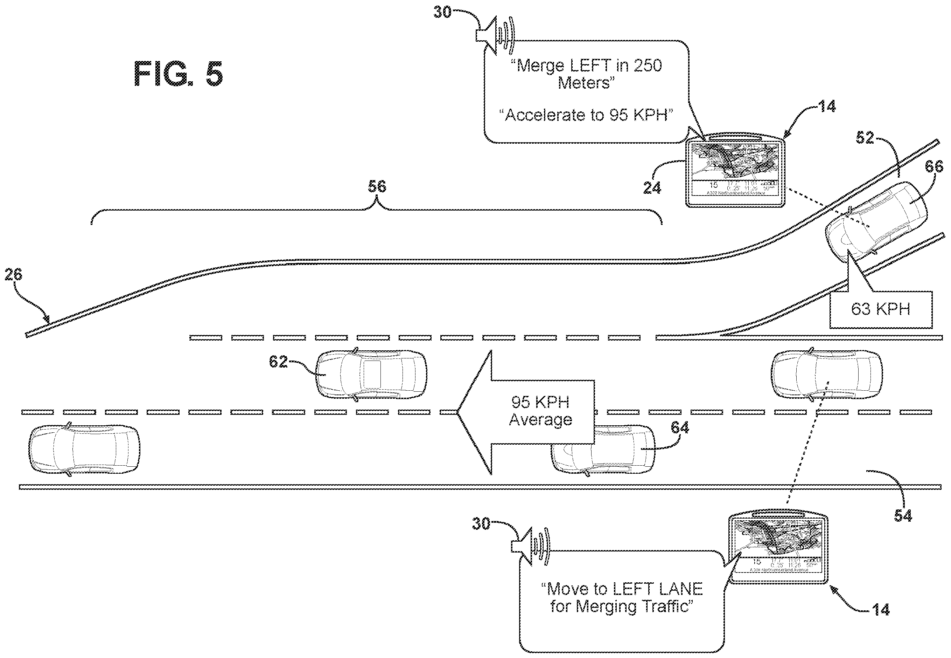

Referring now to Figure 5, the same fragmentary portion of the road network 26 is illustrated, with vehicles 62, 64 depicted in the previously noted positions and an average speed of vehicular traffic on the second road segment having been calculated at 95 km per hour. Vehicle 66 situated on the first road segment 52 is fitted with a navigation system 14 according to the subject invention; i.e., vehicle 66 corresponds to vehicle 10 as described earlier. The subject navigation system 14 includes a computer program which can be executed by the processor 36 and its associated peripheral devices, when approaching the junction 56, to communicate the average speed of surrounding vehicular traffic near the junction 56. In this case, the navigation system 14 audibly communicates the average speed of traffic via the speaker 30. This is shown in Figure 5 by the caption announcing the phrases "Merge LEFT in 250 Meters" and "Accelerate to 95 km/h." It will be understood, however, that a very precise recommendation such as "... to 95 km/h" may be restated in a more general and/or relative fashion, such as "Accelerate and merge within 250 meters" In other words, it may be more effective to provide recommendations that are phrased relative to the speed of the vehicle 66 rather than objective in nature. Situational aspects as the absence or sudden end or narrowing of the shoulder lane, leaving the driver no opportunity to delay the merging operation can be added to the message to the driver. Obviously, this message is ideally provided well ahead of the actual merging area so as to not distract the driver or create unnecessary stress while merging. Preferably, this information needs to be provided only once. However there can be embodiments where such warnings are generated multiple times when approaching or being in the actual merging area. In advanced implementations, embodiments can be imagined in which the turning lights are automatically activated when a vehicles is entering the merging area.

In the exemplary situation of Figure 5, the navigation system 14 recommends a speed increase for the vehicle 66 on the first road segment 52 to match the average determined or calculated speed of traffic on the second road segment 54. Of course, if the average speed on the second road segment 54 were less than the instantaneous speed of the vehicle 66, its navigation system 14 would recommend a speed decrease so as to match the speed of the vehicle 66 with the average speed of traffic on the second road segment 54. Furthermore, the computer program activates the peripherals to communicate the distance between the vehicle 66 and the end of the junction 56. Thus, an audible message to "Merge LEFT in 250 Meters" informs the driver how much driving distance is available before the end of the junction 56. Meanwhile, the display screen 24 visually communicates the distance between the vehicle 66 and the end of the junction by projecting numbers and/or letters forming an appropriately intelligible statement which can be read by the driver of the vehicle 66. This, of course, can be combined with directional cues on the display screen to identify appropriate lane positions, merger directions and other relevant information.

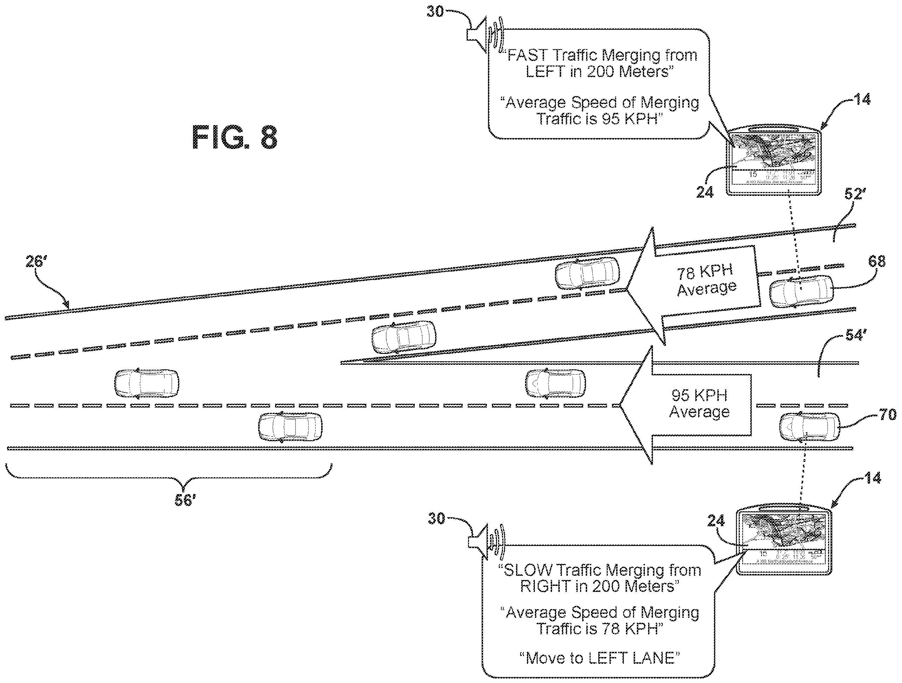

A junction view can be presented on the display 24 in which image data corresponding to a real life view of the junction 56 is visible to a user of the navigation system 14 approaching the junction 56. Such junction views can be prerecorded and/or computer generated. Naturally, the merge data and recommendations can be part of a calculated route which leads the vehicle 66 from a starting position to a particular destination. In an appropriately fitted navigation system 14, it is possible to receive sufficiently accurate position data so as to place the vehicle 66 in a particular lane on its road segment. Thus, in combination with a previously established driving route, the navigation system 14 may inform a driver of the vehicle 66 how many lanes to shift leftward or rightward so as to arrive at a desired lane according to the predetermined route along which the driver is encouraged to follow. Looking forward to an embodiment of this invention described subsequently in connection with Figure 8, a vehicle traveling the section 54 also fitted with a suitable navigation system 14 could at this time receive a message to leave inter-vehicle distance allowing vehicle 66 to merge, encouraged to "Move to the Left Lane" for the purpose of making more space for the merging traffic, and possibly to reduce speed.

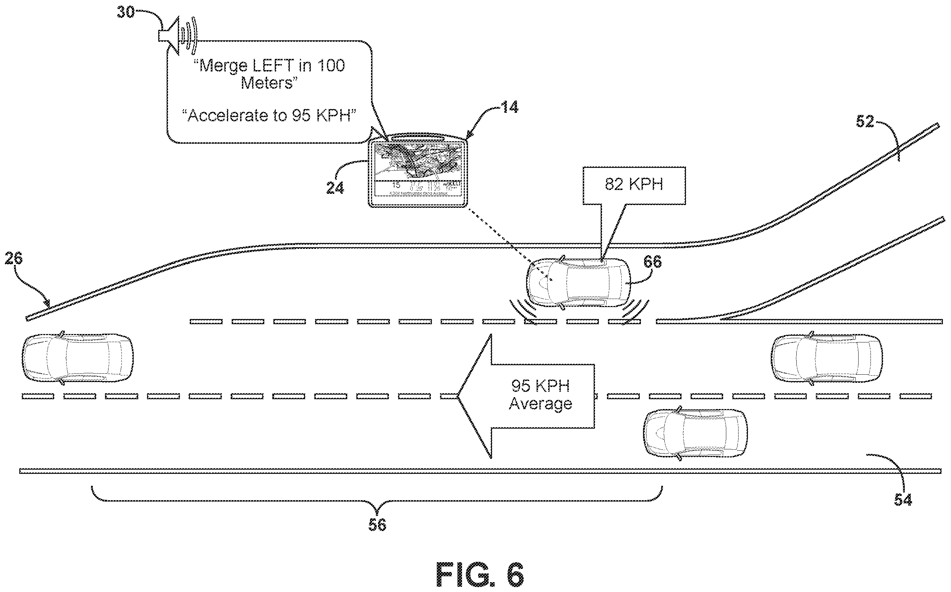

Figure 6 illustrates a further progression, in time, from that view of Figure 5 wherein the vehicle 66 has entered the junction 56 and is signaling an intention to merge with traffic flowing along the second road segment 54. Here, the traffic on the second road segment 54 continues to average 95 km/h. The vehicle 66 containing the navigation system 14 has accelerated to 82 km/h. The navigation system 14 is shown here audibly announcing the following information to a driver, "Merge LEFT in 100 Meters" and "Accelerate to 98 km/h." As suggest earlier, the acceleration recommendation can be presented in simple or relative terms, e.g., "Accelerate" or the like. Alternatively, the speed in the merging area could simply be provided e.g. "Merging speed ahead 95 km/h" Thus, because the navigation system knows the instantaneous speed and position of the vehicle 66 as well as the average speed of traffic on the second roads segment 54, a recommendation is made to increase the speed of the vehicle 66 so as to match the average speed of traffic on the second road segment 54. Again, it is to be understood that the average speed of traffic on the second roads segment 54 is processed for specific time and date for the location from pre-collected data, rather than computed in real time from actual probe data. Distance to the end of the junction 56 is, preferably, audibly stated as well as depicted on the display 24.

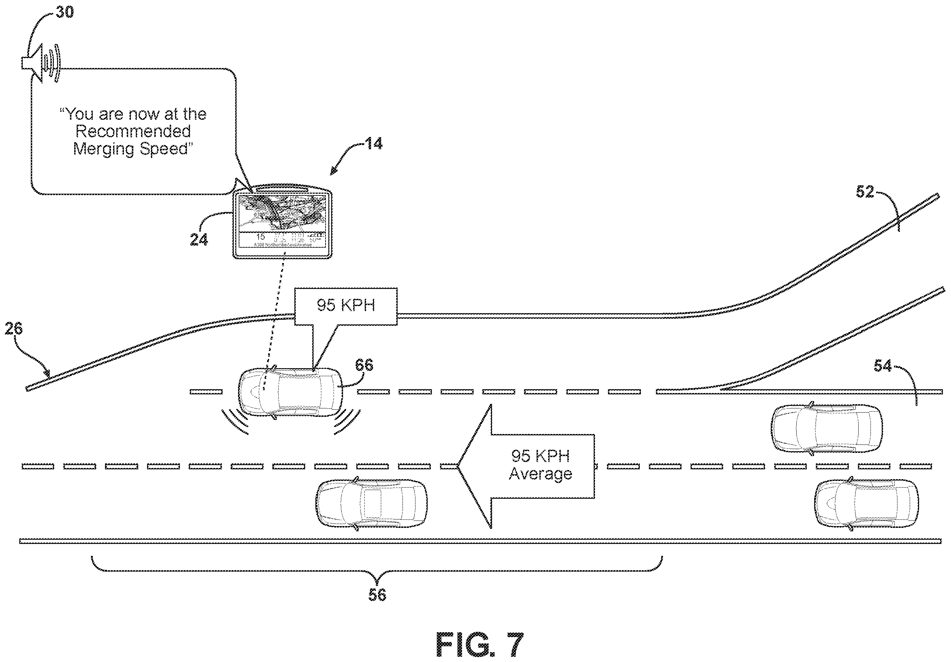

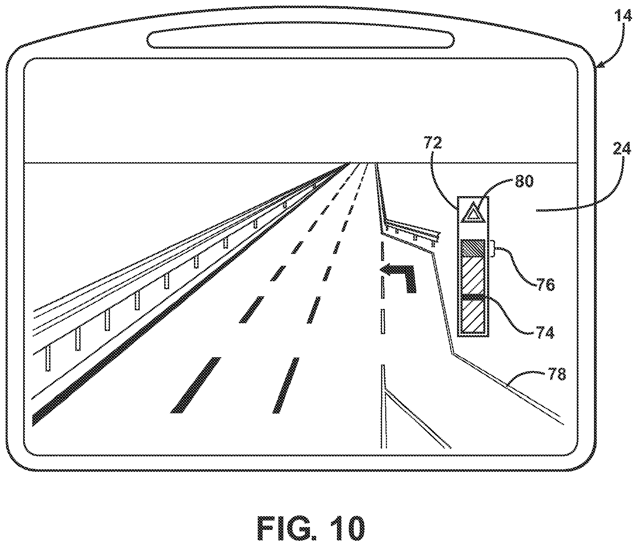

Figure 7 illustrates the same fragment of road network 26 at a moment in time when the vehicle 66 has achieved equality with the average speed of traffic on the second road segment 54. The navigation system 14 announces, via speaker 30, that speed equality with merging traffic speed has been achieved. The driver of vehicle 66 can, with substantially reduced stress, travel along the road network 26 and through the junction 56 while avoiding severe braking or unnecessarily strong acceleration situations. As shown in Figure 10, the navigation system can also display a symbol on the display screen 24 concerning the alarming proximity of the end point of the merger zone 56, or provide some form of haptic signal. Haptic, of course, refers to the communication of information through the sense of touch. For example, it may be useful to fit the driver seat or steering wheel with a device that produces vibration, or a pedal force feedback system, or the like. The audible warning, appearance of the symbol on the display screen 24 and/or haptic signal can be triggered on the pre-set basis of the time in seconds to the end of the lane. For example, the warning is given whenever the end point of the merger zone 56 is within a given number of seconds at the current vehicle velocity and expected acceleration.

It should be noted that in ideal circumstances, the communications and/or recommendations are provided well before the vehicle 66 enters the merging area or junction 56. Figure 5 thus depicts these warning being given while the vehcile 66 is yet on the segment 52. Figures 6 and 7 are thus provided to more fully develop applications for this invention, with warnings in the area 56 being considered mainly extensions of the invention. Preferably for all situations, vehicles in both sections 52 and 54 should be warned well in advance of reaching the merger section 56.

Figure 8 depicts an altogether different road network 26', wherein the first road segment 52' and the second road segment 54' are substantially similar, multi-lane highways which merge together at a junction 56'. In this example, the leftward most lane of the first road segment 52' and the rightward most lane of the second road segment 54' blend together and reduce to a single common lane over the span of the merger region or junction 56'. Furthermore, in this example, the average speed of traffic traveling the first road segment 52 is calculated at 78 km/h using any of the previously described techniques. Likewise, the average speed of traffic flowing along the second road segment 54' is calculated at 95 km/h. Thus, vehicles on the first road segment 52' must accelerate toward the junction 56', whereas vehicles traveling the second road segment 54' must decelerate if they wish to blend safely and harmoniously.

Navigation systems 14 according to this invention are shown residing in a first vehicle 68 on the first road segment 52' and a second vehicle 70 on the second road segment 54'. I.e., vehicles 68 and 70 correspond to vehicle 10 as described earlier. Each navigation system 14 communicates relevant information to its driver regarding the upcoming merger of the first and second road segments 52', 54'. As relates to the first vehicle 68, the navigation system 14 audibly communicates that "FAST traffic [will be] merging from LEFT in 200 Meters." Thus, the driver of vehicle 68 is forewarned that traffic flowing along the second road segment 52' has a greater average speed, that merger will occur from the left, and that the end of the junction 56' will occur in 200 meters. Furthermore, the driver of the first vehicle 68 is notified that the "Average speed of merging traffic is 95 km/h." Thus, the driver of the first vehicle 68 will be notified of the average speed of traffic on the second road segment 54' so that due consideration can be given for the upcoming merger of traffic flows within the junction 56'. Similarly, the navigation system 14 residing in the second vehicle 70 notifies its driver that "SLOW traffic [will be] merging from RIGHT in 200 Meters." Thus, this driver knows that traffic on the first road segment 52' is moving slower, that the merge direction will come from the right, and that the end of the upcoming junction 56' occurs in 200 meters. Furthermore, the driver of the second vehicle 70 is notified that the "Average speed of merging traffic is 75 km/h." Relative speed change recommendations can also be given at this time, such as "Accelerate" or "Decelerate" through visual and/or audible techniques. The driver of the second vehicle 70 may also be encouraged to "Move to the Left Lane" for the purpose of making more space for the merging traffic. By providing drivers with this information, the stress of merging with the traffic flow in the first road segment 52' can be reduced and thereby improve the driving experience as well as driving safety of all concerned. Of course, the specific phasing of these instructions can be adapted as needed.

Whether the subject method and navigation system 14 is used within the context of merging traffic flow from an on-ramp, lane mergers, lane reductions, or otherwise, the information communicated to the vehicle driver concerning the average speed of traffic in the other road segment substantially enhances the driver's ability to pilot a vehicle in a safe, courteous manner. The subject method and navigation system 14 contemplates the use of historical speed data which can be stored in a map and used in products that calculate routes based on the real average speed measured on roads rather than speed limits, such as IQ Routes available from TomTom NV. The navigation system would then use the average merging speed at the upcoming road section to calculate and display a recommended merging speed.

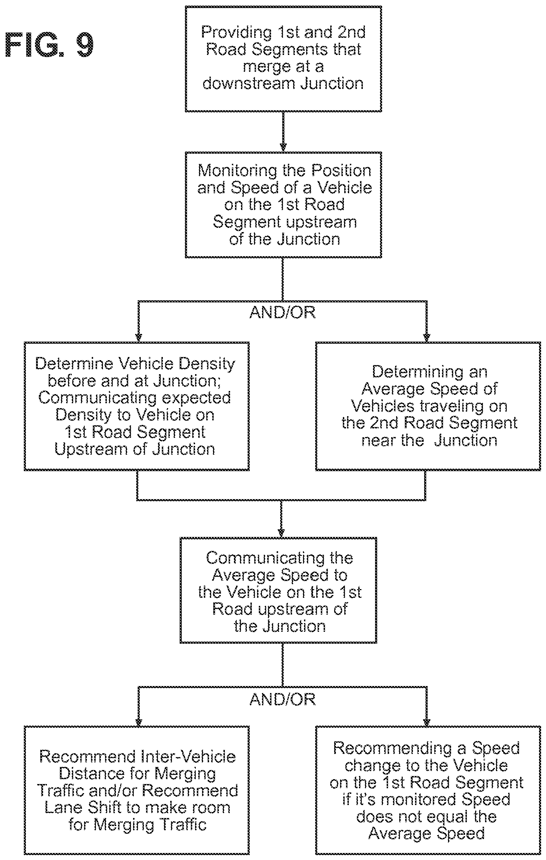

Figure 9 represents, in simplified form, the method steps of this invention wherein first and second road segments 52, 54 are provided within the context of a road network 26 and unite or merge together at a downstream junction 56. The position and speed of a vehicle on the first road segment 52, fitted with the subject navigation system 14, is monitored. (It is to be understood that the designation of first and second road segments is arbitrary, and can be applied regardless of the relative road classification or average traffic speed.) Meanwhile, an average speed of vehicles traveling on the second road segment 54 near the junction 56 is determined through some known technique. It may be desirable to utilize a service centre as providing this information to the vehicle via a wireless communication network. And the service centre has received data from various sources. The service centre can be linked to a road side communication unit (e.g. Wireless LAN, DSRC, CALM) providing information to the device 14 or be in direct contact with the device 14 via cellular networks GSM/GPRS/UMTS, etc.

The navigation system 14 and method then recommends a speed change to the vehicle on the first road segment 52 if its monitored speed does not equal the average speed determined of vehicles traveling on the second road segment 54. This recommendation can be coupled with communicating the average speed of traffic on the second road segment 54, communicating the distance to the end of the junction 56, visually displaying distance and directional information, cues and other graphical data useful for navigation purposes. Thus, the subject navigation system 14, together with its implementation method, provides the driver with a preview of the situation ahead, thereby allowing her or him to focus on the speed necessary to achieve a fluidic merger with traffic even if the upcoming merger zone or end of the junction 56 is not visible. Advantageously, there is no need for precise lane-level positioning and map information in the context of this invention. Thus, in lane merger situations, even if the driver is not in the particular lane that will suddenly end, he or she will be advised if surrounding traffic will suddenly perform lane merger actions so that proactive and defensive/courteous driving maneuvers can be implemented. This situation would thus be applicable to the second vehicle 70 as shown in Figure 8, whose lane is not directly affected by the merging traffic flows in the junction 56' but who will nevertheless be wise to take note of conditions that will affect surrounding traffic.

In one implementation of this invention, a digital map representation includes a triggering mechanism to initiate the described lane merging warnings and recommendations. For example, the simple road elements attached to nodes can include certain attribute information to trigger the warnings. As an example, road segment represented by the merging section of Figure 10, an attribute tag may be associated with this particular road segment that indicates "Lane merging; Right lane merges left in 400 meters before 'to node'" (where the "to node" lies between current road segment and the next segment). Or in another example still referencing Figure 10, an attribute tag may be associated with the merger road segment that indicates "Number of Lanes:4" and the next road segment (after the "to node") would include an attribute tag indicating "Number of Lanes:3". Lane merger warnings such as "Right lane merges into left: Slow Down Please" and the like can thus be triggered by algorithms run by the processor in the navigation system 14 based on the road segments to which it is matched. Lane level positioning is thus not required to make a useful lane merging warning applications. This is not to suggest however that this invention is not compatible with lane level positioning if and when available.

Steps can be taken, in a proactive manner, to detect entry points and thereby preprocess images for the database or to generate on-the-fly images presented through the display 24. For example, if the vehicle is soon or currently in a gas station, parking or rest area, or going back to a motorway, these factors can be used to anticipate which images may be needed to display and which voice commands may be required to announce in the very near future. Likewise, if the vehicle is approaching a junction 56, 56' where lanes are merging or where the number of lanes changes ahead, these preprocessing steps may be useful.

Figure 10 provides a highly simplified illustration of a device 14 and display screen 24 presenting information to a driver entering a merging region or lane 56. In this example, the information is visually presented and coveys the need to accelerate to a safe speed to merge with traffic on the main road via a simple bar or "thermometer" style graph 72 in which the current vehicle speed is identified by a dark horizontal line 74 and the recommended merging speed is indicated as a target range 76. In this view, a representation of the boundaries 78 of the merging region 56 are highlighted for easy identification. A warning symbol 80 appears to alert that the merging lane 56 will end soon with no roadside shoulder ahead. The visual presentations on the display screen 24 can be accompanied by audible messages and/or other communications as described earlier.

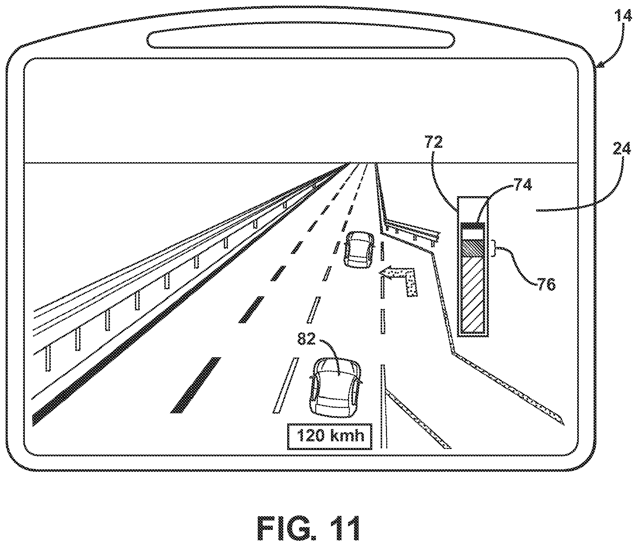

Figure 11 is similar to Figure 10, but shows a device 14 and display screen 24 presenting information to a driver in vehicle 82 on a main road that is approaching a merging region or lane 56. Here again, information is visually presented using a simple bar graph 72 in which the current vehicle speed is identified by a dark horizontal line 74 and the recommended merging speed is indicated as a target range 76. The driver on the main road in this example is traveling much faster than the merging traffic, and also there is a vehicle directly ahead. A safe distance between vehicles on the main road must be created in order to allow for the slower merging traffic. The driver is therefore recommended to slow their current speed or make space by courteously changing lane (shown at 120 km/h), with the cues being calculated to smoothly integrate the on-coming traffic. Accordingly, the system 14 is effective to provide a warning/information message to the driver in vehicle 82 on the main road (i.e., where other cars merge into) to create an adequate inter-vehicle distance or gap to allow vehicles to comfortably merge in combination with the speed recommendation.

The foregoing invention has been described in accordance with the relevant legal standards, thus the description is exemplary rather than limiting in nature. Variations and modifications to the disclosed embodiment may become apparent to those skilled in the art and fall within the scope of the invention. For example, the navigation system 14 may be arranged as an in-car navigation system in a vehicle 10. The computer program included within the system may be arranged to allow its processor 36 to perform the action of receiving position data from a position determination device as to a lane in which the vehicle 10 is driving and informing a driver of the vehicle how many lanes to shift leftward or rightward to arrive at a desired lane according to the route to be followed by the driver. The processor 36 may be connected to a memory storing route planning software arranged to calculate a route to be followed from a starting position to a destination or a likely path forward to the vehicle, in case the routing function is not switched on. Accordingly the scope of legal protection afforded this invention can only be determined by studying the following claims.

## Claims

1. A navigation system (14) of the type to be carried in a vehicle (10) for providing its driver with navigation information, said navigation system (14) comprising:
a processor (36);
a warning device operatively connected to said processor (36) for producing audible, visual and/or haptic information;
a determination device operatively connected to said processor (36) for determining a speed and position of said navigation system (14) relative to a road network (26) comprising at least two road segments (52, 52', 54, 54') that merge over a merger region (56, 56'); and
a computer program executed by said processor (36) and comprising instructions and data in order to allow said processor (36) to, when approaching the merger region (56, 56') on the road network (26), communicate via audible, visual and/or haptic means an average speed of surrounding vehicular traffic proximate said merger region (56, 56');
wherein said computer program causes the warning device to audibly, visually or haptically communicate speed information or a speed change to match the speed of traffic proximate the merger region (56) if the determined speed of said navigation system (14) does not equal the average speed of traffic proximate the merger region (56, 56');
**characterised in that** the average speed of surrounding vehicular traffic proximate said merger region (56, 56') is calculated based on historical speed data.

2. The navigation system (14) according to claim 1, wherein said computer program further causes the warning device to audibly, visually or haptically communicate:
- information indicating the need to leave adequate inter-vehicle distance; and/or
- information indicating the need to move to the adjacent lane.

3. The navigation system (14) according to claim 1 or 2, wherein said navigation system (14) further includes a display (24) for visually displaying route information, and said computer program is arranged to allow said processor (36) to perform the action to present a junction view on said display (24), said junction view comprising image data corresponding to a real-life view of said merger region (56, 56'), said junction view comprising both of said road segments (52, 52', 54, 54') connected to said merger section as visible to a user of the navigation system (14) approaching said merger region (56, 56').

4. A computer-implemented method for providing, via a navigation system (14) in a vehicle (10) traveling a first road segment (52, 52'), navigation information pertaining to merging traffic conditions within a road network having the first road segment (52, 52') and a second (54, 54') road segment that merge over a downstream merger region (56, 56'), said method comprising the steps of:
determining a position and a speed of the navigation system (14) relative to the road network; and
when approaching the merger region (56, 56'), audibly, visually or haptically recommending a speed increase or decrease to conform the speed of the vehicle (10) with the average speed of traffic in the merger region (56, 56'),
**characterised in that** the average speed of surrounding vehicular traffic proximate said merger region (56, 56') is calculated based on historical speed data.

5. The method of claim 4, wherein said step of recommending a speed increase or decrease includes presenting the average speed of traffic in the merger region (56, 56') in speed categories.

6. The method of claim 4 or 5, further including the step of, when approaching the merger region (56, 56'), communicating the travel time between the vehicle and the end of the merger region (56, 56').

7. The method of any one of claims 4 to 6, further including the step of, when approaching the merger region (56, 56'), communicating the distance between the vehicle and the end of the merger region (56, 56').

8. The method of any one of claims 4 to 7, further including the step of, when approaching the merger region (56, 56'), audibly and/or visually communicating a directional cue to merge with traffic at the merger region (56, 56').

9. The method of any one of claims 4 to 8, further including the step of visually displaying a junction view on a display (24), the junction view comprising image data corresponding to a real-life view of the merger region (56, 56') visible to a user of the navigation system (14) approaching the merger region (56, 56').

10. The method of any one of claims 4 to 9, further including the step of calculating a route to be followed from a starting position to a destination.

11. The method of any one of claims 4 to 10, further including the step of receiving lane position data indicating the specific lane in which the vehicle (10) is driving and informing a driver of the vehicle (10) how many lanes to shift leftward or rightward to arrive at a desired lane according to the predetermined route to be followed by the driver.

12. The method of any one of claims 4 to 11, wherein the first road segment (52, 52') of the road network comprises a main road, and further wherein the step of audibly, visually or haptically recommending a speed increase or decrease includes intentionally creating an adequate inter-vehicle distance between the vehicle (10) and vehicular traffic on the second road segment (54, 54') to comfortably merge respective traffic flows in the merger region (56, 56').

13. The method of any one of claims 4 to 12, further including the steps of collecting time dependent speed profile information and then using the time dependent speed profile information during the step of audibly, visually or haptically recommending a speed increase or decrease.

14. The method of any one of claims 4 to 13, wherein said step of audibly, visually or haptically recommending a speed increase or decrease includes associating a triggering attribute with at least the first road segment (52, 52') of the road network in a digital map.

15. A computer program product comprising instructions and data to be loaded by a navigation system (14) and allowing said navigation system (14) to perform the method of any one of claims 4 to 14.

## Patentansprüche

1. Navigationssystem (14) des Typs, der in einem Fahrzeug (10) mitgeführt wird, um seinem Fahrer Navigationsinformationen bereitzustellen, wobei das genannte Navigationssystem (14) Folgendes umfasst:
einen Prozessor (36);
ein Warngerät, das mit dem genannten Prozessor (36) operativ verbunden ist, um hörbare, sichtbare und/oder haptische Informationen zu produzieren;
ein Feststellungsgerät, das mit dem genannten Prozessor (36) operativ verbunden ist, um eine Geschwindigkeit und eine Position des genannten Navigationssystems (14) relativ zu einem Straßennetz (26) festzustellen, das wenigstens zwei Straßensegmente (52, 52', 54, 54') umfasst, die über eine Zusammenführungsregion (56, 56') zusammengeführt werden; und
ein Computerprogramm, ausgeführt von dem genannten Prozessor (36), das Befehle und Daten umfasst, um es dem genannten Prozessor (36) zu gestatten, beim Annähern an die Zusammenführungsregion (56, 56') auf dem Straßennetz (26) über hörbare, sichtbare und/oder haptische Mittel eine Durchschnittsgeschwindigkeit von umgebendem Fahrzeugverkehr in der Nähe der genannten Zusammenführungsregion (56, 56') zu übermitteln;
wobei das genannte Computerprogramm bewirkt, dass das Warngerät hörbar, sichtbar oder haptisch Geschwindigkeitsinformationen oder eine Geschwindigkeitsänderung passend zur Verkehrsgeschwindigkeit in der Nähe der Zusammenführungsregion (56) übermittelt, wenn die festgestellte Geschwindigkeit des genannten Navigationssystems (14) nicht gleich der Durchschnittsgeschwindigkeit von Verkehr in der Nähe der Zusammenführungsregion (56, 56') ist;
**dadurch gekennzeichnet, dass** die Durchschnittsgeschwindigkeit von umgebendem Fahrzeugverkehr in der Nähe der genannten Zusammenführungsregion (56, 56') auf der Basis von historischen Geschwindigkeitsdaten berechnet wird.

2. Navigationssystem (14) nach Anspruch 1, wobei das genannte Computerprogramm ferner bewirkt, dass das Warngerät hörbar, sichtbar oder haptisch Folgendes übermittelt:
- Informationen, die die Notwendigkeit anzeigen, einen ausreichenden Fahrzeugzwischenabstand zu halten; und/oder
- Informationen, die die Notwendigkeit anzeigen, auf die Nachbarspur zu wechseln.

3. Navigationssystem (14) nach Anspruch 1 oder 2, wobei das genannte Navigationssystem (14) ferner ein Display (24) zum visuellen Anzeigen von Routeninformationen beinhaltet und das genannte Computerprogramm so ausgelegt ist, dass es zulässt, dass der genannte Prozessor (36) die Aktion zum Präsentieren einer Kreuzungsansicht auf dem genannten Display (24) durchführt, wobei die genannte Kreuzungsansicht Bilddaten entsprechend einer realistischen Ansicht der genannten Zusammenführungsregion (56, 56') umfasst, wobei die genannte Kreuzungsansicht beide genannten Straßensegmente (52, 52', 54, 54') umfasst, die mit der genannten Zusammenführungssektion wie für einen sich der genannten Zusammenführungsregion (56, 56') nähernden Benutzer des Navigationssystems (14) zu sehen verbunden sind.

4. Computerimplementiertes Verfahren zum Bereitstellen, über ein Navigationssystem (14) in einem über ein erstes Straßensegment (52, 52') fahrenden Fahrzeug (10), von Navigationsinformationen in Bezug auf Zusammenführungsverkehrsbedingungen in einem Straßennetz mit dem ersten Straßensegment (52, 52') und einem zweiten Straßensegment (54, 54'), die über eine abwärts gelegene Zusammenführungsregion (56, 56') zusammengeführt werden, wobei das genannte Verfahren die folgenden Schritte beinhaltet:
Feststellen einer Position und einer Geschwindigkeit des Navigationssystems (14) relativ zu dem Straßennetz, und
hörbares, sichtbares oder haptisches Empfehlen, beim Annähern an die Zusammenführungsregion (56, 56'), einer Geschwindigkeitserhöhung oder - verringerung zum Anpassen der Geschwindigkeit des Fahrzeugs (10) an die Durchschnittsgeschwindigkeit von Verkehr in der Zusammenführungsregion (56, 56'),
**dadurch gekennzeichnet, dass** die Durchschnittsgeschwindigkeit von umgebendem Fahrzeugverkehr in der Nähe der genannten Zusammenführungsregion (56, 56') auf der Basis von historischen Geschwindigkeitsdaten berechnet wird.

5. Verfahren nach Anspruch 4, wobei der genannte Schritt des Empfehlens einer Geschwindigkeitserhöhung oder -verringerung das Präsentieren der Durchschnittsgeschwindigkeit von Verkehr in der Zusammenführungsregion (56, 56') in Geschwindigkeitskategorien beinhaltet.

6. Verfahren nach Anspruch 4 oder 5, das ferner den Schritt des Übermittelns, beim Annähern an die Zusammenführungsregion (56, 56'), der Fahrzeit zwischen dem Fahrzeug und dem Ende der Zusammenführungsregion (56, 56') beinhaltet.

7. Verfahren nach einem der Ansprüche 4 bis 6, das ferner den Schritt des Übermittelns, beim Annähern an die Zusammenführungsregion (56, 56'), des Abstands zwischen dem Fahrzeug und dem Ende der Zusammenführungsregion (56, 56') beinhaltet.

8. Verfahren nach einem der Ansprüche 4 bis 7, das ferner den Schritt des hörbaren und/oder sichtbaren Übermittelns eines Richtungshinweises, beim Annähern an die Zusammenführungsregion (56, 56'), zum Zusammenkommen mit Verkehr in der Zusammenführungsregion (56, 56') beinhaltet.

9. Verfahren nach einem der Ansprüche 4 bis 8, das ferner den Schritt des visuellen Anzeigens einer Kreuzungsansicht auf einem Display (24) beinhaltet, wobei die Kreuzungsansicht Bilddaten entsprechend einer realistischen Ansicht der Zusammenführungsregion (56, 56') umfasst, die für einen sich der genannten Zusammenführungsregion (56,56') nähernden Benutzer des Navigationssystems (14) sichtbar ist.

10. Verfahren nach einem der Ansprüche 4 bis 9, das ferner den Schritt des Berechnens einer Route beinhaltet, der von einer Startposition zu einem Ziel zu folgen ist.

11. Verfahren nach einem der Ansprüche 4 bis 10, das ferner den Schritt des Empfangens von Spurpositionsdaten, die die spezifische Spur anzeigen, in der das Fahrzeug (10) fährt, und des Informierens eines Fahrers des Fahrzeugs (10) darüber beinhaltet, wie viele Spuren er nach links oder rechts wechseln muss, um zu einer gewünschten Spur gemäß der vorbestimmten Route zu kommen, der der Fahrer folgen muss.

12. Verfahren nach einem der Ansprüche 4 bis 11, wobei das erste Straßensegment (52, 52') des Straßennetzes eine Hauptstraße umfasst und wobei ferner der Schritt des hörbaren, sichtbaren oder haptischen Empfehlens einer Geschwindigkeitserhöhung oder -verringerung das absichtliche Erzeugen eines ausreichenden Fahrzeugzwischenabstands zwischen dem Fahrzeug (10) und Fahrzeugverkehr auf dem zweiten Straßensegment (54, 54') beinhaltet, um bequem jeweilige Verkehrsflüsse in der Zusammenführungsregion (56, 56') zusammenzuführen.

13. Verfahren nach einem der Ansprüche 4 bis 12, das ferner die Schritte des Sammelns von zeitabhängigen Geschwindigkeitsprofilinformationen und dann des Benutzens der zeitabhängigen Geschwindigkeitsprofilinformationen während des Schrittes des hörbaren, sichtbaren oder haptischen Empfehlens einer Geschwindigkeitserhöhung oder -verringerung beinhaltet.

14. Verfahren nach einem der Ansprüche 4 bis 13, wobei der genannte Schritt des hörbaren, sichtbaren oder haptischen Empfehlens einer Geschwindigkeitserhöhung oder -verringerung das Assoziieren eines Auslöseattributs mit wenigstens dem ersten Straßensegment (52, 52') des Straßennetzes in einer digitalen Karte beinhaltet.

15. Computerprogrammprodukt, das Befehle und Daten umfasst, die von einem Navigationssystem (14) zu laden sind und es dem genannten Navigationssystem (14) erlauben, das Verfahren nach einem der Ansprüche 4 bis 14 durchzuführen.

## Revendications

1. Système de navigation (14) du type destiné à être transporté dans un véhicule (10) pour fournir à son conducteur des informations de navigation, ledit système de navigation (14) comprenant :
un processeur (36) ;
un dispositif d'alerte connecté de manière opérationnelle audit processeur (36) pour produire des informations audibles, visuelles et/ou haptiques ;
un dispositif de détermination connecté de manière opérationnelle audit processeur (36) pour déterminer une vitesse et une position dudit système de navigation (14) par rapport à un réseau routier (26) comprenant au moins deux segments routiers (52, 52', 54, 54') qui convergent sur une région de convergence (56, 56'); et
un programme informatique exécuté par ledit processeur (36) et comprenant des instructions et des données afin de permettre audit processeur (36), lors de l'approche de la région de convergence (56, 56') sur le réseau routier (26), de communiquer par l'intermédiaire de moyens audibles, visuels et/ou haptiques une vitesse moyenne du trafic véhiculaire environnant à proximité de ladite région de convergence (56, 56') ;
dans lequel ledit programme informatique oblige le dispositif d'alerte à communiquer audiblement, visuellement ou haptiquement des informations de vitesse ou un changement de vitesse pour qu'elle concorde avec la vitesse du trafic à proximité de la région de convergence (56) si la vitesse déterminée dudit système de navigation (14) n'est pas égale à la vitesse moyenne du trafic à proximité de la région de convergence (56, 56') ;
**caractérisé en ce que** la vitesse moyenne du trafic véhiculaire environnant à proximité de ladite région de convergence (56, 56') est calculée sur la base de données de vitesse historiques.

2. Système de navigation (14) selon la revendication 1, dans lequel ledit programme informatique oblige en outre le dispositif d'alerte à communiquer audiblement, visuellement ou haptiquement :
- des informations indiquant la nécessité de laisser une distance inter-véhicules adéquate ; et/ou
- des informations indiquant la nécessité de se déplacer vers la voie adjacente.

3. Système de navigation (14) selon la revendication 1 ou 2, dans lequel ledit système de navigation (14) inclut en outre un afficheur (24) pour afficher visuellement des informations d'itinéraire, et ledit programme informatique est agencé de façon à permettre audit processeur (36) de réaliser l'action pour présenter une vue de l'embranchement sur ledit afficheur (24), ladite vue de l'embranchement comprenant des données d'image correspondant à une vue véritable de ladite région de convergence (56, 56'), ladite vue de l'embranchement comprenant lesdits deux segments routiers (52, 52', 54, 54') raccordés à ladite section de convergence telle qu'elle est visible à un utilisateur du système de navigation (14) s'approchant de ladite région de convergence (56, 56').

4. Procédé mis en oeuvre par ordinateur pour fournir, par l'intermédiaire d'un système de navigation (14) dans un véhicule (10) se déplaçant sur un premier segment routier (52, 52'), des informations de navigation afférant aux conditions de trafic de convergence au sein d'un réseau routier dont le premier segment routier (52, 52') et un deuxième segment routier (54, 54') convergent sur une région de convergence en aval (56, 56'), ledit procédé comprenant les étapes consistant à :
déterminer une position et une vitesse du système de navigation (14) par rapport au réseau routier ; et
lors de l'approche de la région de convergence (56, 56'), recommander audiblement, visuellement ou haptiquement une augmentation ou une diminution de vitesse pour que la vitesse du véhicule (10) soit conforme à la vitesse moyenne du trafic dans la région de convergence (56, 56'),
**caractérisé en ce que** la vitesse moyenne du trafic véhiculaire environnant à proximité de ladite région de convergence (56, 56') est calculée sur la base de données de vitesse historiques.

5. Procédé de la revendication 4, dans lequel ladite étape consistant à recommander une augmentation ou une diminution de vitesse inclut la présentation de la vitesse moyenne du trafic dans la région de convergence (56, 56') par catégories de vitesse.

6. Procédé de la revendication 4 ou 5, incluant en outre l'étape, lors de l'approche de la région de convergence (56, 56'), consistant à communiquer la durée de déplacement entre le véhicule et la fin de la région de convergence (56, 56').

7. Procédé de l'une quelconque des revendications 4 à 6, incluant en outre l'étape, lors de l'approche de la région de convergence (56, 56'), consistant à communiquer la distance entre le véhicule et la fin de la région de convergence (56, 56').

8. Procédé de l'une quelconque des revendications 4 à 7, incluant en outre l'étape, lors de l'approche de la région de convergence (56, 56'), consistant à communiquer audiblement et/ou visuellement une indication directionnelle pour converger avec du trafic au niveau de la région de convergence (56, 56').

9. Procédé de l'une quelconque des revendications 4 à 8, incluant en outre l'étape consistant à afficher visuellement une vue d'un embranchement sur un afficheur (24), la vue de l'embranchement comprenant des données d'image correspondant à une vue véritable de la région de convergence (56, 56') visible à un utilisateur du système de navigation (14) s'approchant de la région de convergence (56, 56').

10. Procédé de l'une quelconque des revendications 4 à 9, incluant en outre l'étape consistant à calculer un itinéraire destiné à être suivi à partir d'une position de départ jusqu'à une destination.

11. Procédé de l'une quelconque des revendications 4 à 10, incluant en outre l'étape consistant à recevoir des données de position de voie indiquant la voie spécifique dans laquelle le véhicule (10) est en train de circuler et à informer un conducteur du véhicule (10) du nombre de voies dont il faut se décaler vers la gauche ou vers la droite pour arriver à une voie désirée en fonction de l'itinéraire prédéterminé destiné à être suivi par le conducteur.

12. Procédé de l'une quelconque des revendications 4 à 11, dans lequel le premier segment routier (52, 52') du réseau routier comprend une route principale, et en outre dans lequel l'étape consistant à recommander audiblement, visuellement ou haptiquement une augmentation ou une diminution de vitesse inclut la création intentionnelle d'une distance inter-véhicules adéquate entre le véhicule (10) et un trafic véhiculaire sur le deuxième segment routier (54, 54') pour faire converger confortablement des flux de trafic respectifs dans la région de convergence (56, 56').

13. Procédé de l'une quelconque des revendications 4 à 12, incluant en outre les étapes consistant à collecter des informations de profil de vitesse à dépendance temporelle, et ensuite à utiliser les informations de profil de vitesse à dépendance temporelle durant l'étape consistant à recommander audiblement, visuellement ou haptiquement une augmentation ou une diminution de vitesse.

14. Procédé de l'une quelconque des revendications 4 à 13, dans lequel ladite étape consistant à recommander audiblement, visuellement ou haptiquement une augmentation ou une diminution de vitesse, inclut l'association d'un attribut de déclenchement avec au moins le premier segment routier (52, 52') du réseau routier dans une carte numérique.

15. Produit à programme informatique comprenant des instructions et des données destinées à être chargées par un système de navigation (14) et permettant audit système de navigation (14) de réaliser le procédé de l'une quelconque des revendications 4 à 14.
